# FASCICULE DE BREVET EUROPEEN

(11) **EP 4 584 508 B1**
(45) Date de publication et mention de la délivrance du brevet: **24.06.2026**
(21) Numéro de dépôt: 23769105.0
(22) Date de dépôt: 06.09.2023
(51) Int. Cl.: F16B 19/02, F16B 21/12, F16B 21/14, F16B 2/16, F16B 3/00, F16B 5/06, F16B 15/08

(54) **GOUPILLE**
STIFT
PIN

(30) Priorité: 09.09.2022 US 202263375112 P; 20.09.2022 FR 2209488
(43) Date de publication de la demande: 16.07.2025
(73) Titulaire: A. RAYMOND ET CIE, 38000 Grenoble (FR)
(72) Inventeur: LOCATELLI, Julien, 38500 Voiron (FR); FRIEDRICH, Christian, Los Osos, CA 93402 (US); DAILEY, Scott, Menlo Park, CA 94025 (US)
(74) Mandataire: IP Trust
(86) Numéro de dépôt international: PCT/EP2023/074372
(87) Numéro de publication internationale: WO 2024/052368

(56) Documents cités:
- EP-A1- 3 907 411
- US-A- 3 553 794
- US-B2- 6 318 943
- US-B2- 7 581 912

## Description

### DOMAINE DE L'INVENTION

La présente invention concerne une goupille, notamment pour retenir des éléments dans un rail. Plus particulièrement, elle permet de fixer le cadre d'un module photovoltaïque dans un rail d'une structure porteuse.

### ARRIERE PLAN TECHNOLOGIQUE DE L'INVENTION

La plupart des modules photovoltaïques comprennent un cadre métallique, et notamment un cadre en aluminium, disposé à la périphérie desdits modules. Ce cadre métallique, en plus de rigidifier mécaniquement le module photovoltaïque, permet également de fixer ce dernier sur un rail métallique, par exemple en acier, d'une structure porteuse.

Lors de la fixation du cadre métallique du module photovoltaïque sur le rail de la structure porteuse, il doit être tenu compte du fait qu'une fois installé, le module peut être soumis à de fortes sollicitations, par exemple par les efforts exercés par le vent, notamment d'arrachement du module hors du rail, tendant à désolidariser le cadre du module de la structure porteuse. Quelles que soient les conditions auxquelles est soumis un module, il est nécessaire d'éviter que le cadre se détache de la structure porteuse et s'envole. Il est également nécessaire de maintenir un contact électrique ininterrompu entre le cadre du module et la structure de support afin de conserver l'ensemble mis à la terre électriquement.

Ces contraintes sont d'autant plus importantes à prendre en compte lorsque la structure porteuse est associée à un dispositif mobile permettant d'orienter de manière optimale les modules photovoltaïques en fonction de la position du soleil, ou de toute autre circonstance. En particulier, l'inclinaison des modules provoque leur fléchissement, qui induit des contraintes notables sur le dispositif de fixation du module au rail dans la direction orthogonale à la direction d'arrachement, ce qui peut provoquer le glissement du dispositif de fixation et son désengagement, et donc entraîner la désolidarisation du module et de la structure porteuse.

Le document EP 3 907 411 Al décrit une goupille métallique destinée à fixer de manière simple, rapide et fiable des éléments, notamment le cadre d'un module photovoltaïque, dans un rail d'une structure porteuse.

La présente invention a pour but de résoudre au moins une partie des problèmes mentionnés ci-dessus, en proposant une solution qui permet notamment une fixation simple et rapide des éléments dans un rail, afin de former un assemblage qui présente une forte résistance aux différentes contraintes et déformations mentionnées ci-dessus et qui permet de maintenir un contact électrique continu entre les éléments et le rail.

### DESCRIPTION DE L'INVENTION

Le but de la présente invention est atteint par une goupille selon la revendication 1, comprenant un corps métallique s'étendant le long d'un axe d'élongation entre une première extrémité et une seconde extrémité, et ayant une face supérieure et une face inférieure opposée à la face supérieure, la goupille comprenant :
- une section centrale sensiblement plane,
- deux sections intermédiaires s'étendant chacune latéralement à partir de la section centrale et de manière divergente l'une par rapport à l'autre, et de manière à permettre l'empilement d'au moins deux goupilles dans une direction d'empilement perpendiculaire aux sections centrales des goupilles ;
- des moyens d'encliquetage disposés sur l'une et l'autre des deux sections intermédiaires et configurés pour maintenir par encliquetage les goupilles entre elles deux-à-deux lorsqu'elles sont empilées.

Selon un mode de mise en œuvre, lorsque deux goupilles sont empilées, l'une des deux goupilles recouvre, par sa face inférieure, la face supérieure de l'autre des deux goupilles.

Selon un mode de mise en œuvre, chaque section intermédiaire est prolongée latéralement, dans une direction latérale perpendiculaire à l'axe d'élongation, par une section latérale, chaque section intermédiaire formant, avec la section latérale qui la prolonge, une aile latérale de forme générale concave par la face supérieure de la goupille.

Selon un mode de mise en œuvre, chaque aile latérale est ajourée.

Selon un mode de mise en œuvre, ladite goupille comprend, de la première extrémité à la seconde extrémité, une portion de butée et une portion principale, chaque section latérale comprenant une languette latérale qui s'étend depuis un bord libre de ladite section latérale et au niveau de la partie de butée, lesdits bords libres étant tous deux parallèles à l'axe d'élongation ou s'étendant de manière convergente de la première extrémité vers la seconde extrémité.

Selon un mode de mise en œuvre, ladite goupille comprend une languette d'arrêt, formée sur la section centrale, au niveau d'une portion d'arrêt en aval de la portion principale selon une direction allant de la première extrémité vers la deuxième extrémité, la languette d'arrêt s'étend, selon une direction allant de la deuxième extrémité vers la première extrémité, de manière divergente par rapport à la face supérieure.

Selon un mode de mise en œuvre, les moyens d'encliquetage comprennent au moins une paire d'encliquetage pourvue d'une ouverture traversante et d'un bossage.

Selon un mode de mise en œuvre, les moyens d'encliquetage sont agencés pour que l'ouverture traversante d'une paire d'encliquetage d'une section intermédiaire de l'une de deux goupilles empilées coopère avec le bossage d'une paire d'encliquetage d'une section intermédiaire de l'autre desdites deux goupilles empilées de manière à assurer le maintien par encliquetage desdites goupilles empilées.

Selon un mode de mise en œuvre, le bossage d'une paire d'encliquetage formée sur une section intermédiaire est formée sur la face supérieure et en amont de l'ouverture traversante de la paire d'encliquetage considérée selon une direction d'extension latérale de la section intermédiaire.

Selon un mode de mise en œuvre, le bossage d'une paire d'encliquetage formée sur une section intermédiaire est formée sur la face inférieure et en aval de l'ouverture traversante de la paire d'encliquetage considérée selon une direction d'extension latérale de la section intermédiaire.

Selon un mode de mise en œuvre, chaque section intermédiaire comprend deux paires d'encliquetage.

Selon l'invention ladite goupille comprend à sa deuxième extrémité une portion d'engagement de forme générale biseautée.

Chaque section intermédiaire comprend, au niveau de la portion d'engagement, deux ailettes planes et repliées intérieurement de manière à conférer à la portion d'engagement sa forme biseauté.

Alternativement, la portion d'engagement comprend une section plane inclinée par rapport à la section centrale de manière à conférer à la portion d'engagement sa forme biseautée, la section plane s'étendant depuis la section centrale vers la deuxième extrémité et est reliée latéralement aux sections intermédiaires.

Selon un mode de mise en œuvre, le corps métallique est réalisé en acier trempé.

L'invention concerne également un ensemble de goupilles selon la présente invention, lesdites goupilles sont empilées dans une direction perpendiculaire à la section centrale, et maintenues mécaniquement entre elles deux à deux.

### Brève description des dessins

D'autres caractéristiques et avantages de l'invention ressortiront de la description détaillée suivante en référence aux figures annexées dans lesquelles :
[Fig.1] La [Fig.1] est une représentation schématique en vue en perspective d'une goupille selon la présente invention, en particulier la goupille est orientée de manière à pouvoir observer sa face supérieure ;
[Fig.2] La [Fig.2] est une représentation schématique en vue latérale de la goupille illustrée à la [Fig.1] ;
[Fig.3] La [Fig.3] est une représentation schématique de la goupille de la [Fig.1], en particulier la [Fig.3] est une représentation en coupe transversale de la goupille selon un plan perpendiculaire à l'axe d'élongation ;
[Fig.4] La [Fig.4] représente une pluralité de goupilles empilées le long d'une direction perpendiculaire à la section centrale desdites goupilles ;
[Fig.5] La [Fig.5] représente un moyen d'encliquetage formé sur une section intermédiaire, en particulier le moyen d'encliquetage illustré sur la [Fig.5] comprend une paire d'encliquetage munie d'un bossage et d'une ouverture traversante, plus particulièrement, la [Fig.5] illustre une paire d'encliquetage selon un premier aspect ;
[Fig.6] La [Fig.6] est une représentation de l'encliquetage d'une première goupille en recouvrement d'une deuxième goupille ;
[Fig.7] La [Fig.7] est une représentation d'un panneau photovoltaïque sur une face arrière duquel sont fixés des rails secondaires ;
[Fig.8] La [Fig.8] est une représentation d'une première étape d'insertion du rail secondaire dans l'espace en U du rail de support ;
[Fig.9] La [Fig.9] illustre une deuxième étape permettant de fixer le rail secondaire dans l'espace en U du rail de support ;
[Fig.10] La [Fig.10] est une représentation d'une variante de la goupille selon la présente invention, la goupille étant montée sur un outil ;
[Fig.11] La [Fig.11] est une représentation d'un outil dédié à la manipulation des goupilles selon la présente invention ;
[Fig.12] La [Fig.12] est une représentation d'un deuxième exemple d'outil dédié à la manipulation des goupilles selon la présente invention.

### DESCRIPTION DETAILLEE DE L'INVENTION

Pour des raisons de simplicité dans la description qui suit, les mêmes références sont utilisées pour les éléments qui sont identiques, ou qui remplissent la même fonction dans les différents modes de réalisation de l'invention.

La présente invention concerne une goupille permettant de retenir un élément dans un rail de support présentant une section transversale en forme de U. En particulier, l'invention concerne une goupille de retenue d'un élément tel qu'un rail secondaire, fixé sur la face arrière d'un module photovoltaïque, et inséré dans un rail en U, par exemple le rail d'une structure porteuse métallique. A cet égard, la goupille est destinée à être insérée selon un axe d'élongation de ladite goupille dans des ouvertures prévues dans des parois latérales du rail support et dans un passage traversant du rail secondaire. Cet ensemble permet ainsi de fixer le rail secondaire dans le rail de support.

La goupille selon la présente invention comprend un corps métallique s'étendant le long d'un axe d'élongation entre une première extrémité et une seconde extrémité, et présentant une face supérieure et une face inférieure opposée à la face supérieure.

La goupille comprend notamment :
- une section centrale essentiellement plate ;
- deux sections intermédiaires s'étendant chacune latéralement à partir de la section centrale et de manière divergente l'une par rapport à l'autre, et de manière à permettre l'empilement d'au moins deux goupilles dites, respectivement, première et deuxième goupilles ;
- des moyens d'encliquetage disposés sur l'une ou l'autre des deux sections intermédiaires et configurés pour maintenir par encliquetage la première goupille et la seconde goupille ensemble lorsqu'elles sont empilées.

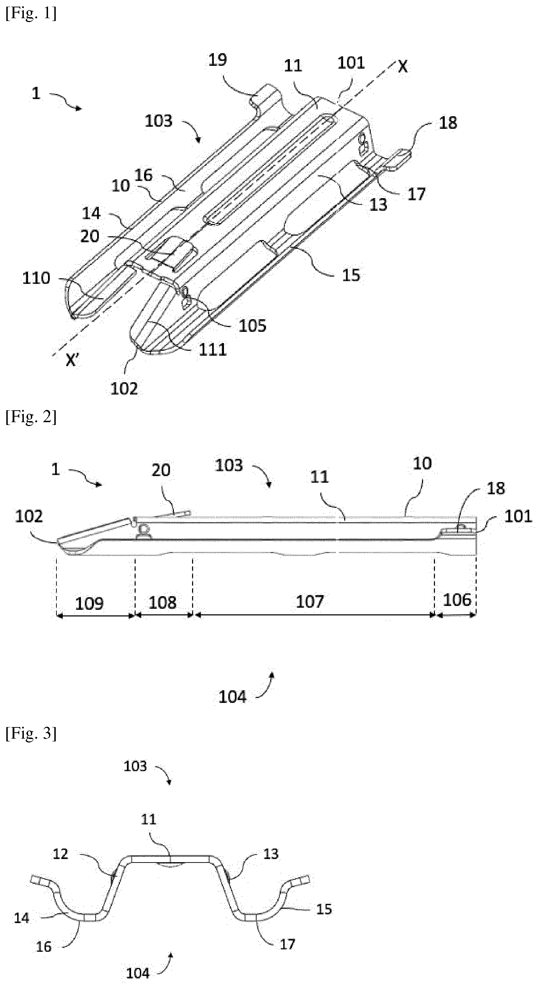

La [Fig.1], la [Fig.2] et la [Fig.3] sont différentes représentations schématiques d'une goupille 1 selon les principes énoncés dans la présente invention.

En particulier, la goupille 1 comprend un corps métallique 10 qui s'étend le long d'une direction d'élongation XX' entre une première extrémité 101 et une seconde extrémité 102.

Le corps métallique 10 présente une face supérieure 103 et une face inférieure 104 opposée à la face supérieure 103.

Le corps métallique 10 est constitué d'une bande métallique. La formation de la goupille 1 peut comprendre la découpe, l'estampage ou le pliage de la bande métallique.

Le matériau du corps métallique 10 est avantageusement de l'acier trempé, dont la forme est modelée à froid avant de réaliser une trempe thermique à 800°C par exemple. L'acier peut ensuite être protégé contre la corrosion par une étape de traitement de surface. Le choix d'un tel matériau est particulièrement avantageux en ce qu'il permet un modelage aisé avant trempage, puis, après trempage, une résistance mécanique et une élasticité importantes.

De manière générale, la goupille 1 comprend une section centrale 11 de forme générale plane. Il est entendu que la section centrale 11 présente une forme allongée selon l'axe d'élongation XX'. En particulier, la section centrale 11 présente une forme rectangulaire et comprend ainsi deux bords latéraux parallèles à l'axe d'élongation XX'.

La goupille 1 comprend également deux sections intermédiaires 12 et 13. En particulier, ces deux sections intermédiaires 12 et 13 s'étendent chacune latéralement à partir de la section centrale 11 et de manière divergente l'une par rapport à l'autre. Il est entendu qu'une section intermédiaire 12 ou 13 qui s'étend latéralement à partir de la section centrale 11, s'étend nécessairement à partir d'un bord latéral de ladite section centrale. Plus particulièrement, chaque section intermédiaire 12 et 13 s'étend à partir d'un bord latéral qui lui est propre. Il est également entendu que les deux sections intermédiaires s'étendent symétriquement l'une de l'autre par rapport à un plan perpendiculaire à la section centrale, et équidistant des bords latéraux de ladite section centrale.

Il est également entendu que les deux sections intermédiaires s'étendent dans une direction parallèle à l'axe d'élongation et plus particulièrement sur une longueur qui peut être supérieure à la longueur des bords latéraux de la section centrale 11.

L'écartement croissant et/ou la forme des sections intermédiaires 12 et 13 sont notamment adaptés pour permettre l'empilement d'une pluralité de goupilles 1. A cet égard, les sections intermédiaires peuvent présenter une forme plane, une forme convexe ou une forme concave par la face supérieure.

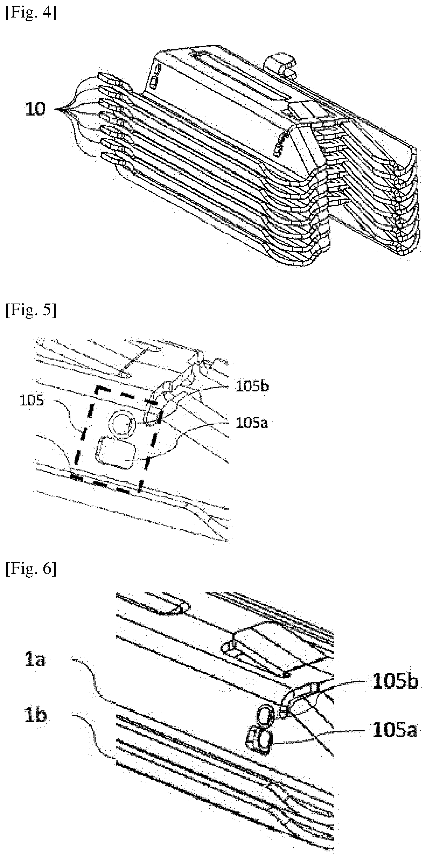

La [Fig.4] représente une pluralité de goupilles 1 empilées les unes sur les autres. En particulier, les goupilles sont empilées les unes sur les autres selon une direction perpendiculaire à la section centrale 11, dite direction d'empilement. A titre d'exemple, l'empilement peut comprendre deux goupilles empilées dites, respectivement, première goupille et deuxième goupille. Plus particulièrement, la première goupille peut recouvrir la deuxième goupille. En d'autres termes, la première goupille recouvre, par sa face inférieure, la face supérieure de la deuxième goupille.

La goupille 1 comprend également des moyens d'encliquetage disposés sur l'une ou l'autre des sections intermédiaires 12 et 13. Notamment, ces moyens d'encliquetage sont configurés pour maintenir par encliquetage les goupilles 1 encliquetées deux-à-deux lorsqu'elles sont empilées.

Selon un mode de réalisation particulièrement avantageux, les moyens d'encliquetage comprennent au moins une paire d'encliquetage 105 pourvue d'une ouverture traversante 105a et d'un bossage 105b ([Fig.1], et [Fig.5]). Notamment, les moyens d'encliquetage sont agencés pour que l'ouverture traversante 105a d'une paire d'encliquetage d'une section intermédiaire de l'une de deux goupilles empilées coopère avec le bossage 105b d'une paire d'encliquetage d'une section intermédiaire de l'autre de deux goupilles empilées de manière à assurer le maintien par encliquetage desdites goupilles empilées.

Plus particulièrement, et à titre d'exemple, la [Fig.6] est une représentation schématique de l'empilement de deux goupilles dites respectivement première goupille 1a et deuxième goupille 1b. Sur cette [Fig.6], la face inférieure de la première goupille 1a recouvre la face supérieure de la deuxième goupille 1b. Par ailleurs, et toujours sur l'exemple illustré à la [Fig.6], la paire d'encliquetage, dite première paire, de la première goupille est à l'aplomb de la paire d'encliquetage, dite deuxième paire, de la deuxième goupille. Notamment, dans cet exemple, pour chaque paire d'encliquetage, le bossage est disposé sur la face supérieure (et sur la section intermédiaire) tandis que l'ouverture traversante se trouve en aval dudit bossage selon la direction d'extension latérale de la section intermédiaire considérée. Ainsi, l'encliquetage de la première goupille et de la deuxième goupille fait intervenir une coopération du bossage de la deuxième paire avec l'ouverture traversante de la première paire. Cette coopération implique notamment l'insertion du bossage dans l'ouverture traversante.

L'insertion du bossage dans l'ouverture traversante peut impliquer une légère déformation de l'une des sections intermédiaires de l'une et/ou l'autre de la première et de la deuxième goupille.

Ainsi, conformément à ce qui précède, et selon un premier aspect relatif aux moyens d'encliquetage, le bossage d'une paire d'encliquetage formée sur une section intermédiaire est formé sur la face supérieure et en amont de l'ouverture traversante de la paire d'encliquetage considérée selon une direction d'extension latérale de la section intermédiaire.

Selon un deuxième aspect, non représenté sur les figures, le bossage d'une paire d'encliquetage formée sur une section intermédiaire est formé sur la face inférieure et en aval de l'ouverture traversante de la paire d'encliquetage considérée selon une direction d'extension latérale de la section intermédiaire.

L'invention, et notamment la configuration des moyens d'encliquetage, n'est pas limitée à ces deux aspects, et l'homme du métier pourra considérer d'autre moyens d'encliquetage. Il est notamment possible de considérer une paire d'encliquetage pourvue d'un ergot et d'une ouverture non traversante.

Dans un mode de réalisation particulièrement avantageux, chaque section intermédiaire peut être pourvue de deux moyens d'encliquetage.

Toujours de manière avantageuse, chaque section intermédiaire peut être prolongée latéralement, selon une direction latérale perpendiculaire à l'axe d'élongation, par une section latérale 14 et 15. Plus particulièrement, chaque section intermédiaire forme, avec la section latérale qui la prolonge, une aile latérale 16 et 17 de forme généralement concave par la face supérieure 103 de la goupille 1.

Toujours selon un mode de réalisation avantageux, chaque aile latérale 16 et 17 est ajourée.

De manière générale, on peut distinguer différentes portions de la goupille 1. En particulier, et tel qu'illustré sur la [Fig.2], la goupille 1 peut comprendre, de la première extrémité 101 vers la deuxième extrémité 102, une portion de butée 106 et une portion principale 107. En particulier, la goupille 1 peut comprendre des languettes latérales formées sur sa portion de butée 106. Ces languettes latérales jouent notamment le rôle de butée lorsque la goupille est mise en œuvre pour le maintien d'un élément dans un rail de support. A cet égard, deux languettes latérales 18 et 19 ([Fig.1] et [Fig.2]) peuvent s'étendre depuis un bord libre de l'une ou l'autre des sections latérales 14 et 15 et au niveau de la portion de butée 106. Ces bords libres peuvent être parallèles à l'axe d'élongation ou s'étendre de manière convergente de la première extrémité vers la seconde extrémité.

De manière complémentaire, la goupille comprend une languette d'arrêt 20, formée sur la section centrale 11 au niveau d'une portion d'arrêt 108 en aval de la portion principale 107 dans le sens de la première extrémité 101 vers la deuxième extrémité 102. En particulier, la languette d'arrêt 20 s'étend dans une direction allant de la deuxième extrémité vers la première extrémité, de manière divergente par rapport à la face supérieure 103.

Le goupille comprend une portion d'engagement 109 en aval de la portion principale, avantageusement en aval de la portion d'arrêt, selon la direction allant de la deuxième extrémité vers la première extrémité. La portion d'engagement 109 comprend une forme biseauté.

A cet égard, chaque section intermédiaire comprend, au niveau de la portion d'engagement, deux ailettes planes 110, 111 et repliées intérieurement de manière à conférer à la portion d'engagement sa forme biseauté.

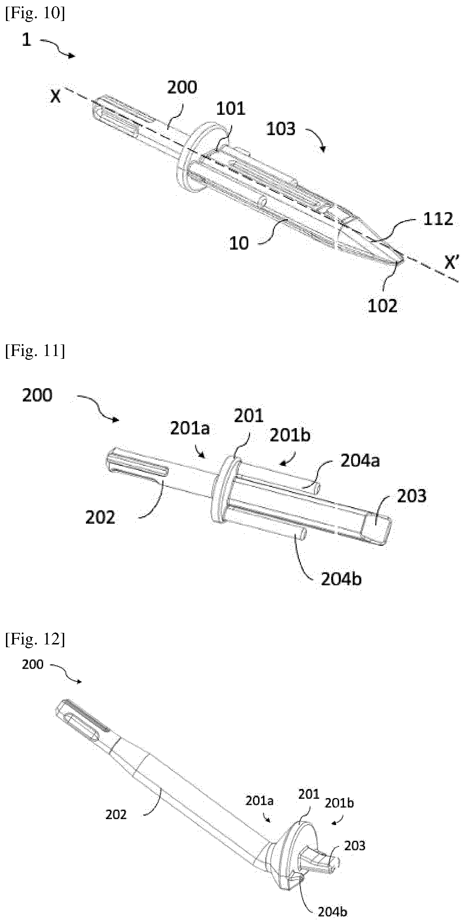

Selon une variante illustrée à la [Fig.10], la portion d'engagement 109 peut comprendre une section plane 112 inclinée par rapport à la section centrale 11 de manière à conférer à la portion d'engagement sa forme biseautée. En particulier, la section plane 112 s'étend depuis le tronçon central 11 vers la seconde extrémité 102. Notamment, la section plane 112 peut être reliée latéralement aux sections intermédiaires 12 et 13.

La goupille 1 est avantageusement utilisée pour maintenir un module photovoltaïque sur un ou plusieurs rails de support.

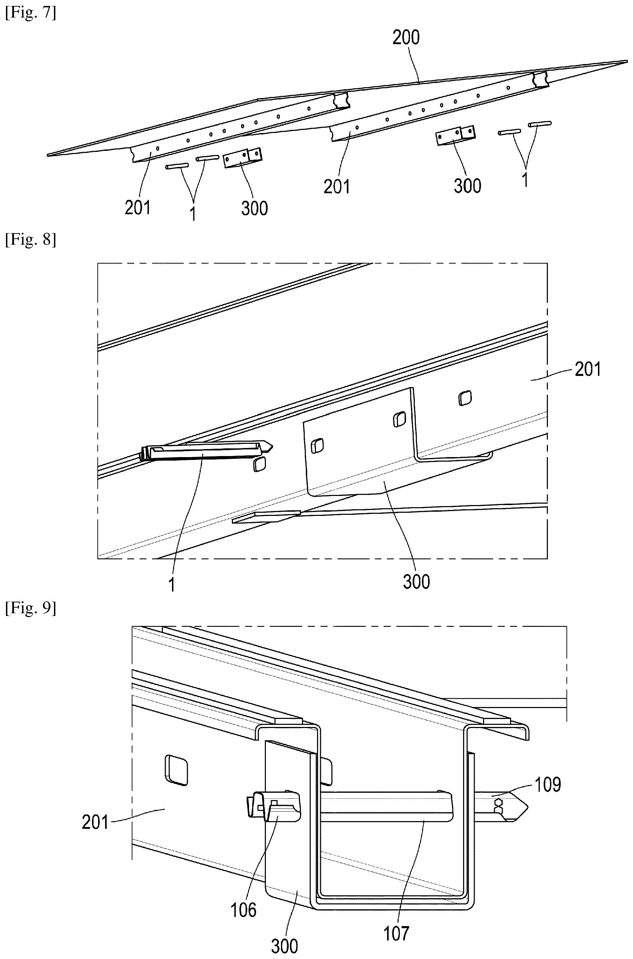

A cet égard, la [Fig.7] est une représentation d'un panneau photovoltaïque 200 sur une face arrière duquel sont fixés des rails secondaires 201. Ces rails secondaires 201 sont notamment parallèles les uns aux autres. La [Fig.7] représente également des rails de support 300 appartenant à une structure porteuse.

Les rails support 300 présentent une section en U et sont ainsi conformés pour loger dans leur espace en U un rail secondaire 201. Notamment, le rail secondaire peut présenter une forme conforme à l'espace en U du rail support 300. Le rail secondaire et le rail support comprennent également des ouvertures traversantes latérales ménagées pour permettre l'insertion d'une goupille en vue d'attacher ledit rail secondaire audit rail support.

Ainsi, la fixation du panneau photovoltaïque à la structure porteuse comprend une première étape d'insertion du rail secondaire 201 dans l'espace U du rail support 300 ( [Fig.8]). Cette insertion est notamment exécutée de manière à mettre en vis-à-vis les ouvertures latérales du rail support et du rail secondaire.

Cette première étape est suivie d'une deuxième étape d'insertion de la goupille 1 par sa portion d'engagement dans une ouverture latérale du rail support. La forme biseauté de la portion d'engagement facilite l'engagement de ladite goupille.

Lors de l'exécution de cette deuxième étape, un effort d'insertion est exercé sur la première extrémité.

A l'issue de la deuxième étape ([Fig.9]), la portion de butée se trouve en butée, par ses languette latérales, contre une paroi latérale, dite paroi d'insertion, du rail support, tandis que la portion d'arrêt se trouve en projection par rapport à une paroi du rail et opposée à la paroi d'insertion. La languette d'arrêt 20 permet de retenir la goupille 1 dans une position de blocage.

Une goupille 1 selon l'invention permet ainsi de fixer un rail secondaire à un rail support de manière simple et solide.

En outre, la prise en compte des bords libres des sections latérales 14 et 15 s'étendant de manière non parallèle facilite l'insertion de la goupille dans l'ouverture.

Un outil dédié pour engager la goupille dans les ouvertures latérales est également décrit. Notamment, l'outil dédié 200 (illustré sur la [Fig.11]) comprend une section centrale 201 présentant deux faces parallèles dites, respectivement, première face 201a et deuxième face 201b. Par exemple, la section centrale 201 peut avoir une forme de disque. L'outil dédié 200 comprend en outre un arbre principal 202 s'étendant, de manière perpendiculaire, depuis la première face 201a de la section centrale. Notamment, l'arbre principal 202 est configuré pour le montage de l'outil 200 sur un dispositif (non représenté).

L'outil 200 comprend également une tige centrale 203 et deux tiges latérales 204a et 204b s'étendant, de manière perpendiculaire, depuis la deuxième face 201b. Notamment, les deux tiges latérales 204a et 204b sont disposées de manière symétrique par rapport à la tige centrale 203.

L'utilisation des goupilles peut en outre impliquer l'utilisation de l'outil dédié 200. Notamment, une goupille 1 peut être installée sur ledit outil dédié 200 (tel qu'illustré sur la [Fig.10]). En particulier, lorsque la goupille est montée sur l'outil 200, la tige centrale 203 est positionnée contre la section centrale 11 par la face inférieure, tandis que les deux tiges latérales 204a et 204b sont chacune positionnées contre une aile latérale 16, 17 par la face supérieure 103.

L'installation d'une goupille sur l'outil peut se faire à l'aide d'un chargeur automatisé qui comprend un magasin dans lequel est chargé un ensemble de goupilles empilées.

La [Fig.12] représente un deuxième exemple d'outil 200 pour l'engagement d'une goupille dans les ouverture latérales.

Ce deuxième exemple reprend pour l'essentielle les caractéristiques de l'exemple représenté à la [Fig.11]. Toutefois, et contrairement à l'exemple précédent, l'arbre principal 202 comprend un coude qui le lie à la section centrale 201 de sorte que ledit arbre s'étend de manière oblique à partir de la section centrale 201.

Tel qu'illustré à la [Fig.12], la tige centrale 203 et les deux tiges latérales 204a et 204b peuvent présenter des longueurs et formes différentes des celles l'exemple de la [Fig.11].

Bien entendu, l'invention n'est pas limitée aux méthodes de mise en œuvre décrites et des mises en œuvre alternatives peuvent être réalisées sans s'écarter de la portée de l'invention telle que définie par les revendications.

## Revendications

1. Goupille (1) comprenant un corps métallique (10) s'étendant le long d'un axe d'élongation entre une première extrémité (101) et une seconde extrémité (102), et ayant une face supérieure (103) et une face inférieure (104) opposée à la face supérieure (103), la goupille (1) comprenant :
- une section centrale sensiblement plane (11),
- deux sections intermédiaires (12, 13) s'étendant chacune latéralement à partir de la section centrale (11) et de manière divergente l'une par rapport à l'autre, et de manière à permettre l'empilement d'au moins deux goupilles (1) dans une direction d'empilement perpendiculaire aux sections centrales des goupilles (1) ;
la goupille (1) comprenant, en outre, à sa deuxième extrémité (102) une portion d'engagement (109) de forme générale biseautée, et, **caractérisé en ce que** la goupille comprend au choix :
- chaque section intermédiaire (12, 13) comprend, au niveau de la portion d'engagement, deux ailettes planes et repliées intérieurement de manière à conférer à la portion d'engagement sa forme biseauté ; ou
- la portion d'engagement comprend une section plane (112) inclinée par rapport à la section centrale (11) de manière à conférer à la portion d'engagement sa forme biseautée, la section plane (112) s'étendant depuis la section centrale (11) vers la deuxième extrémité (102) et est reliée latéralement aux sections intermédiaires (12,13), et **en ce que** des moyens d'encliquetage sont disposés sur l'une et l'autre des deux sections intermédiaires (12,13) et configurés pour maintenir par encliquetage les goupilles (1) entre elles deux-à-deux lorsqu'elles sont empilées.

2. Goupille (1) selon la revendication 1, dans laquelle, lorsque deux goupilles (1) sont empilées, l'une des deux goupilles (1) recouvre, par sa face inférieure (104), la face supérieure (103) de l'autre des deux goupilles (1).

3. Goupille (1) selon la revendication 1 ou 2, dans laquelle chaque section intermédiaire (12, 13) est prolongée latéralement, dans une direction latérale perpendiculaire à l'axe d'élongation, par une section latérale (14, 15), chaque section intermédiaire (12, 13) formant, avec la section latérale (14, 15) **qui** la prolonge, une aile latérale (16, 17) de forme générale concave par la face supérieure (103) de la goupille (1).

4. Goupille (1) selon la revendication 3, dans laquelle chaque aile latérale (16, 17) est ajourée.

5. Goupille (1) selon la revendication 3 ou 4, dans laquelle ladite goupille (1) comprend, de la première extrémité (101) à la seconde extrémité (102), une portion de butée (106) et une portion principale (107), chaque section latérale (14, 15) comprenant une languette latérale (18, 19) qui s'étend depuis un bord libre de ladite section latérale (14, 15) et au niveau de la partie de butée (106), lesdits bords libres étant tous deux parallèles à l'axe d'élongation ou s'étendant de manière convergente de la première extrémité vers la seconde extrémité.

6. Goupille (1) selon la revendication 5, dans laquelle ladite goupille (1) comprend une languette d'arrêt (20), formée sur la section centrale (11), au niveau d'une portion d'arrêt (108) en aval de la portion principale (107) selon une direction allant de la première extrémité (101) vers la deuxième extrémité (102), la languette d'arrêt (20) s'étend, selon une direction allant de la deuxième extrémité (102) vers la première extrémité (101), de manière divergente par rapport à la face supérieure (103).

7. Goupille (1) selon l'une des revendications 1 à 6, dans laquelle les moyens d'encliquetage comprennent au moins une paire d'encliquetage (105) pourvue d'une ouverture traversante (105a) et d'un bossage (105b).

8. Goupille (1) selon la revendication 7, dans laquelle les moyens d'encliquetage sont agencés pour que l'ouverture traversante (105a) d'une paire d'encliquetage (105) d'une section intermédiaire (12, 13) de l'une de deux goupilles (1) empilées coopère avec le bossage (105b) d'une paire d'encliquetage (105) d'une section intermédiaire (12, 13) de l'autre desdites deux goupilles (1) empilées de manière à assurer le maintien par encliquetage desdites goupilles (1) empilées.

9. Goupille (1) selon la revendication 8, dans laquelle le bossage (105b) d'une paire d'encliquetage (105) formée sur une section intermédiaire (12, 13) est formée sur la face supérieure (103) et en amont de l'ouverture traversante (105a) de la paire d'encliquetage (105) considérée selon une direction d'extension latérale de la section intermédiaire (12, 13).

10. Goupille (1) selon la revendication 8, dans laquelle le bossage (105b) d'une paire d'encliquetage (105) formée sur une section intermédiaire (12, 13) est formée sur la face inférieure (104) et en aval de l'ouverture traversante (105a) de la paire d'encliquetage (105) considérée selon une direction d'extension latérale de la section intermédiaire (12, 13).

11. Goupille (1) selon l'une quelconque des revendications 7 à 10, dans laquelle chaque section intermédiaire (12, 13) comprend deux paires d'encliquetage.

12. Goupille (1) selon l'une quelconque des revendications 1 à 11, dans laquelle le corps métallique est réalisé en acier trempé.

13. Ensemble de goupilles (1) selon l'une des revendications 1 à 12, dans lequel lesdites goupilles (1) sont empilées dans une direction perpendiculaire à la section centrale (11), et maintenues mécaniquement entre elles deux à deux.

## Patentansprüche

1. Stift (1), umfassend einen metallischen Körper (10), der sich entlang einer Ausdehnungsachse zwischen einem ersten Ende (101) und einem zweiten Ende (102) erstreckt und eine obere Fläche (103) und eine der oberen Fläche (103) gegenüberliegende untere Fläche (104) aufweist, der Stift (1) umfassend:
- einen im Wesentlichen ebenen Mittelbereich (11),
- zwei Zwischenbereiche (12, 13), die sich jeweils seitlich von dem Mittelabschnitt (11) und voneinander divergierend und derart erstrecken, dass das Stapeln von mindestens zwei Stiften (1) in einer Stapelrichtung senkrecht zu den Mittelabschnitten der Stifte (1) ermöglicht wird;
der Stift (1) ferner umfassend, an seinem zweiten Ende (102), einen Eingriffsabschnitt (109) mit allgemein abgeschrägter Form, und
**dadurch gekennzeichnet, dass** der Stift wahlweise umfasst:
- jeder Zwischenbereich (12, 13) umfasst auf der Höhe des Eingriffsabschnitts zwei ebene und nach innen umgefaltete Flügel, um dem Eingriffsabschnitt seine abgeschrägte Form zu verleihen; oder
- der Eingriffsabschnitt umfasst einen ebenen Bereich (112), der in Bezug auf den Mittelbereich (11) geneigt ist, um dem Eingriffsabschnitt seine abgeschrägte Form zu verleihen, wobei sich der ebene Bereich (112) von dem Mittelbereich (11) zu dem zweiten Ende (102) erstreckt und seitlich mit den Zwischenbereichen (12, 13) verbunden ist, und **dadurch, dass** Einrastmittel an beiden der zwei Zwischenbereiche (12, 13) angeordnet und zum Halten der Stifte (1) paarweise durch Einrasten konfiguriert sind, wenn sie gestapelt sind.

2. Stift (1) nach Anspruch 1, wobei, wenn zwei Stifte (1) gestapelt sind, einer der zwei Stifte (1) mit seiner unteren Fläche (104) die obere Fläche (103) des anderen der zwei Stifte (1) überdeckt.

3. Stift (1) nach Anspruch 1 oder 2, wobei jeder Zwischenbereich (12, 13) seitlich, in einer seitlichen Richtung senkrecht zu der Ausdehnungsachse, durch einen seitlichen Bereich (14, 15) verlängert ist, wobei jeder Zwischenbereich (12, 13) zusammen mit dem seitlichen Bereich (14, 15), der ihn verlängert, einen seitlichen Flügel (16, 17) von allgemein konkaver Form durch die obere Fläche (103) des Stifts (1) ausbildet.

4. Stift (1) nach Anspruch 3, wobei jeder seitliche Flügel (16, 17) durchbrochen ist.

5. Stift (1) nach Anspruch 3 oder 4, wobei der Stift (1) von dem ersten Ende (101) zu dem zweiten Ende (102) einen Anschlagabschnitt (106) und einen Hauptabschnitt (107) umfasst, jeder seitliche Bereich (14, 15) umfassend eine Seitenlasche (18, 19), die sich von einem freien Rand des seitlichen Bereichs (14, 15) und auf Höhe des Anschlagteils (106) erstreckt, wobei die freien Ränder beide parallel zu der Ausdehnungsachse verlaufen oder sich konvergierend von dem ersten Ende zu dem zweiten Ende erstrecken.

6. Stift (1) nach Anspruch 5, wobei der Stift (1) eine Anschlaglasche (20) umfasst, die an dem Mittelbereich (11) auf Höhe eines Anschlagabschnitts (108) stromabwärts des Hauptabschnitts (107) in einer Richtung von dem ersten Ende (101) zu dem zweiten Ende (102) ausgebildet ist, wobei sich die Anschlaglasche (20) in einer Richtung von dem zweiten Ende (102) zu dem ersten Ende (101) divergierend bezüglich der oberen Fläche (103) erstreckt.

7. Stift (1) nach einem der Ansprüche 1 bis 6, wobei die Einrastmittel mindestens ein Einrastpaar (105) umfassen, das mit einer Durchgangsöffnung (105a) und einem Vorsprung (105b) versehen ist.

8. Stift (1) nach Anspruch 7, wobei die Einrastmittel so angeordnet sind, dass die Durchgangsöffnung (105a) eines Einrastpaars (105) eines Zwischenbereichs (12, 13) des einen von zwei gestapelten Stiften (1) mit dem Vorsprung (105b) eines Einrastpaars (105) eines Zwischenbereichs (12, 13) des anderen der zwei gestapelten Stifte (1) zusammenwirkt, um das Halten durch Einrasten der gestapelten Stifte (1) zu gewährleisten.

9. Stift (1) nach Anspruch 8, wobei der Vorsprung (105b) eines Einrastpaars (105), das auf einem Zwischenbereich (12, 13) ausgebildet ist, auf der oberen Fläche (103) und stromaufwärts der Durchgangsöffnung (105a) des betrachteten Einrastpaars (105) gemäß einer seitlichen Erstreckungsrichtung des Zwischenbereichs (12, 13) ausgebildet ist.

10. Stift (1) nach Anspruch 8, wobei der Vorsprung (105b) eines Einrastpaars (105), das auf einem Zwischenbereich (12, 13) ausgebildet ist, auf der unteren Fläche (104) und stromabwärts der Durchgangsöffnung (105a) des betrachteten Einrastpaars (105) gemäß einer seitlichen Erstreckungsrichtung des Zwischenbereichs (12, 13) ausgebildet ist.

11. Stift (1) nach einem der Ansprüche 7 bis 10, wobei jeder Zwischenbereich (12, 13) zwei Einrastpaare umfasst.

12. Stift (1) nach einem der Ansprüche 1 bis 11, wobei der Metallkörper aus gehärtetem Stahl hergestellt ist.

13. Stiftanordnung (1) nach einem der Ansprüche 1 bis 12, wobei die Stifte (1) in einer Richtung senkrecht zu dem Mittelbereich (11) gestapelt und mechanisch paarweise miteinander gehalten werden.

## Claims

1. A pin (1) comprising a metal body (10) extending along an elongation axis between a first end (101) and a second end (102), and having an upper face (103) and a lower face (104) opposite to the upper face (103), the pin (1) comprising:
- a substantially planar central section (11),
- two intermediate sections (12, 13) each extending laterally from the central section (11) in a manner diverging from each other, and so as to allow at least two pins (1) to be stacked in a stacking direction perpendicular to the central sections of the pins (1);
the pin (1) further comprising, at its second end (102), an engagement portion (109) of generally beveled shape, and **characterized in that** the pin comprises either:
- each intermediate section (12, 13) comprises, at the engagement portion, two planar fins folded inward so as to give the engagement portion its beveled shape; or
- the engagement portion comprises a planar section (112) inclined relative to the central section (11) so as to give the engagement portion its beveled shape, the planar section (112) extending from the central section (11) toward the second end (102) and being connected laterally to the intermediate sections (12,13), and **in that** latching means are positioned on each of the two intermediate sections (12, 13) and are configured to latchingly hold the pins (1) together two-by-two when stacked.

2. The pin (1) according to claim 1, wherein, when two pins (1) are stacked, one of the two pins (1) overlaps, with its lower face (104), the upper face (103) of the other of the two pins (1).

3. The pin (1) according to claim 1 or 2, wherein each intermediate section (12, 13) is extended laterally, in a lateral direction perpendicular to the elongation axis, by a lateral section (14, 15), each intermediate section (12, 13) forming, with the lateral section (14, 15) which extends it, a lateral wing (16, 17) of generally concave shape in relation to the upper face (103) of the pin (1).

4. The pin (1) according to claim 3, wherein each lateral wing (16, 17) is perforated.

5. The pin (1) according to claim 3 or 4, wherein said pin (1) comprises, from the first end (101) to the second end (102), an abutment portion (106) and a main portion (107), each lateral section (14, 15) comprising a lateral tongue (18, 19) which extends at the abutment portion (106) from a free edge of said lateral section (14, 15), said free edges both being parallel to the elongation axis or extending convergingly from the first end toward the second end.

6. The pin (1) according to claim 5, wherein said pin (1) comprises a stop tongue (20), formed on the central section (11), at a stop portion (108) downstream of the main portion (107) in a direction from the first end (101) toward the second end (102), the stop tongue (20) extending in a direction from the second end (102) toward the first end (101), in a manner diverging from the upper face (103).

7. The pin (1) according to any of claims 1 to 6, wherein the latching means comprise at least one latching pair (105) provided with a through opening (105a) and a boss (105b).

8. The pin (1) according to claim 7, wherein the latching means are arranged so that the through opening (105a) of a latching pair (105) of an intermediate section (12, 13) of one of two stacked pins (1) interacts with the boss (105b) of a latching pair (105) of an intermediate section (12, 13) of the other of said two stacked pins (1) so as to ensure that said stacked pins (1) are latchingly held.

9. The pin (1) according to claim 8, wherein the boss (105b) of a latching pair (105) formed on an intermediate section (12, 13) is formed on the upper face (103) and upstream of the through opening (105a) of the latching pair (105) considered in a lateral extension direction of the intermediate section (12, 13).

10. The pin (1) according to claim 8, wherein the boss (105b) of a latching pair (105) formed on an intermediate section (12, 13) is formed on the lower face (104) and downstream of the through opening (105a) of the latching pair (105) considered in a lateral extension direction of the intermediate section (12, 13).

11. The pin (1) according to any one of claims 7 to 10, wherein each intermediate section (12, 13) comprises two latching pairs.

12. The pin (1) according to any one of claims 1 to 11, wherein the metal body is made of hardened steel.

13. A set of pins (1) according to any of claims 1 to 12, wherein said pins (1) are stacked in a direction perpendicular to the central section (11), and are mechanically held together two-by-two.
